# EUROPÄISCHE PATENTSCHRIFT

(11) **EP 1 453 124 B1**
(45) Veröffentlichungstag und Bekanntmachung des Hinweises auf die Patenterteilung: **08.07.2009**
(21) Anmeldenummer: 03027542.4
(22) Anmeldetag: 29.11.2003
(51) Int. Cl.: H01M 2/06

(54) **Akkumulator mit Anschlusspol**
Terminal for accumulator
Borne terminale pour accumulateur

(30) Priorität: 13.01.2003 DE 10301043
(43) Veröffentlichungstag der Anmeldung: 01.09.2004
(73) Patentinhaber: VB Autobatterie GmbH & Co. KGaA, 30419 Hannover (DE)
(72) Erfinder: Popp, Karlo, 30952 Ronnenberg (DE)
(74) Vertreter: Gerstein, Hans Joachim

(56) Entgegenhaltungen:
- DE-A1- 3 313 419
- GB-A- 1 547 752
- GB-A- 2 123 205
- US-A- 4 331 748
- US-A- 4 495 260
- PATENT ABSTRACTS OF JAPAN Bd. 010, Nr. 275 (E-438), 18. September 1986 (1986-09-18) & JP 61 096660 A (MATSUSHITA ELECTRIC IND CO LTD), 15. Mai 1986 (1986-05-15)

## Beschreibung

Die Erfindung betrifft einen Akkumulator mit wenigstens einem nach außen flüssigkeits- und gasdicht abgeschlossenen Anschlusspol, der einen in eine Polhülse eingesetzten Polschaft umfasst, wobei die Polhülse elektrisch leitend mit dem Polschaft verbunden ist und wobei die Polhülse flüssigkeits- und gasdicht von einem Deckel aufgenommen ist.

Bei Akkumulatoren der eingangs genannten Gattung wird ein Polschaft an einer Elektroden-Endplatte befestigt. Die Polhülse wird in den Deckel eingeformt. Beim Zusammenbau des Akkumulators wird die Polhülse beim Aufsetzen des Deckels auf den Polschaft geschoben. Die Polhülse und der Polschaft werden zur Bildung eines Anschlusspols auch gas- und flüssigkeitsdicht miteinander verbunden. Außerdem muss eine elektrisch leitende Verbindung zwischen Polhülse und Polschaft erzeugt werden. Dazu sind die Außenmaße des Polschaftes nahezu gleich den Innenmaßen der Polhülse. Folglich berühren sich die Polhülse und der Polschaft beim Aufbringen der Polhülse auf den Polschaft. Da der Polschaft und die Polhülse aus eher stumpfen Materialien wie etwa Blei bestehen, kommt es beim Aufbringen zu nicht unbeträchtlicher Reibung. Diese kann im Extremfall so groß sein, dass ein Aufschieben der Polhülse auf den Polschaft nur unter großem Kraftaufwand möglich ist, und ein Schließen eines Akkumulatordeckels dann zu einer Verbiegung des Polschaftes oder einer Verformung des Deckels des Akkumulators führen kann.

In dem US-Patent 6,030,723 ist ein Akkumulator vorgeschlagen worden, bei dem das Überbringen der Polhülse auf den Polschaft einfacher durchzuführen ist und dessen Herstellung ohne ein Verschweißen von Polhülse und Polschaft erfolgt. Die Polhülse ist dabei an einem Ende mit einem der festen Aufnahme des Polschaftes dienenden Endabschnitt geschlossen und bildet somit allein d.h. ohne den Polschaft einen Abschluss nach außen. Von einem Einführende aus verläuft der Innenmantel der Polhülse kegelförmig so bis zu dem Endabschnitt, dass bei eingebrachtem Polschaft über dessen ganze Länge ein Zwischenraum zwischen Polschaft und Polhülse gegeben ist. Dadurch ist das Aufschieben von Polhülse und Polschaft erleichtert. Der Zwischenraum ist zum Endabschnitt hin mit einem elektrisch leitenden Klebstoff ausgefüllt, um die Polhülse fest und elektrisch leitend mit dem Polschaft zu verbinden. Der elektrisch leitende Kleber kann aber Alterungsprozessen unterliegen und so zu einer im Laufe der Zeit schlechter werdenden elektrischen Verbindung führen.

Ferner wird in dem US-Patent auch eine weitere Ausführung der Polhülse vorgestellt, die an dem Ende zum Akkumulatorgehäuse einen konischen Einführabschnitt aufweist. Der konische Einführabschnitt erstreckt sich axial über mehr als die halbe Polhülse. Zum Endabschnitt hin sind die Innenmaße der Polhülse etwa gleich den Außenmaßen des Polschaftes. Dadurch soll bereits durch die Berührung der beiden Teile ein elektrisch leitender Kontakt entstehen. Zusätzlich kann die elektrisch leitende Verbindung zwischen Polhülse und Polschaft auch durch ein von außen mittels eines Werkzeuges hervorgerufenes Anpressen des Endabschnittes auf den Polschaft verbessert werden. So wird zwar das Einführen des Polschaftes in die Polhülse durch den konischen Einführabschnitt vereinfacht, das vollständige Einführen des Polschaftes bis zum Endabschnitt der Polhülse gestaltet sich dennoch schwierig. Außerdem ist das dort vorgeschlagene Anpressen von beiden Teilen hinsichtlich der Homogenität der elektrischen Verbindung der Teile schlechter als ein Verschweißen.

US 4,495,260 A offenbart einen durch eine Polhülse hindurch geschobenen Polschaft. Polhülse und Polschaft sind über den gesamten zylindrischen Bereich der Polhülse, angrenzend an einen konischen Bereich, miteinander verbunden.

GB 1 542 752 A offenbart einen Akkumulator, bei dem ein Aschlusspol durch eine Hülse geschoben ist. Im mittleren Anschlussbereich des Polschaftes zur Hülse ist ein Kupfereinsatz zur Reduzierung des Innenwiderstandes vorgesehen.

GB 2 123 205 A offenbart einen Akkumulator, bei dem ein Polschaft durch eine Polhülse geschoben und durch Lötverbindungen im oberen Bereich elektrisch kontaktiert werden. Die Polhülse ist konusförmig, so dass der Polschaft im oberen Lötbereich gas- und flüssigkeitsdicht sowie elektrisch leitend mit der Polhülse verbunden ist. Die Polhülse ist in ein Gleitelement eingespritzt, das an den Batteriedeckel angeschweißt ist.

DE 33 13 419 A1 offenbart einen Akkumulator, bei dem der Polschaft vorzugsweise im Bereich von Rillen mit einem Schrumpfschlauch umkleidet ist. Die Poloberfläche wird durch Wärmeeinwirkung auf den Schrumpfschlauch säuredicht und gas- und oxidfest umkleidet. Der Schrumpfschlauch erstreckt sich über die Länge der Polhülse hinaus nach oben und unten und sorgt für eine elektrische Isolierung des Pols gegenüber der Gewindeverschraubung des Zellendeckels.

Der Erfindung liegt daher die Aufgabe zugrunde, einen Akkumulator der eingangs genannten Gattung so zu gestalten, dass eine Endmontage zur Herbeiführung eines Betriebszustandes vereinfacht wird und gleichzeitig eine gute elektrisch leitende Verbindung zwischen Polhülse und Polschaft besteht.

Die Aufgabe wird bei dem eingangs genannten Akkumulator dadurch gelöst, dass ein erster Abschnitt des Polschaftes mit einem diesen umgebenden Innenmantel der Polhülse gas- und flüssigkeitsdicht sowie elektrisch leitend verbunden ist und dass zwischen einem zweiten Abschnitt des Polschaftes und dem Innenmantel der Polhüise ein Gleitelement vorgesehen ist.

Erfindungsgemäß wird zwischen den Polschaft und die Polhülse ein Gleitelement gebracht. Das Aufbringen der Polhülse auf den Polschaft, das notwendig ist, um den Akkumulator in einen betriebsbereiten Zustand zu überführen, wird dann durch das Gleitelement vermittelt. Dadurch ist ein reibungsarmes Gleiten einer Innenwandung der Polhülse über den Polschaft sichergestellt. Dabei ist selbst dann ein leichtes Überschieben möglich, wenn die Außenmaße des Polschaftes und die innenmaße der Polhülse so einander angepasst sind, dass bereits bei aufgeschobener Polhülse ein Kontakt zwischen Polhülse und Polschaft besteht.

Die Erfindung ermöglicht es folglich, dass auch eine Polhülse leichtgängig auf einen Polschaft gebracht beziehungsweise geschoben werden kann, wenn die Polhülse den Polschaft zumindest teilweise gleich beabstandet umgibt. Eine konische Formgebung etwa über die gesamte Länge des Polschaftes zur Erleichterung des Überschiebens der Polhülse auf den Polschaft ist nicht notwendig. Erfindungsgemäß ist das Gleitelement so vorgesehen, dass ein Verschweißen oder Verlöten von Polhülse und Polschaft zum Erzeugen sowohl der elektrisch leitenden Verbindung von Polschaft und Polhülse als auch des gas- und flüssigkeitsdichten Abschließens des Anschlusspols nicht beeinträchtigt wird.

Die Erfindung bringt den Vorteil mit sich, dass eine Beschädigung des Polschaftes und/oder der Polhülse beim Aufschieben der Polhülse auf den Polschaft weitestgehend vermieden wird.

In einer Ausführungsform des erfindungsgemäßen Akkumulators ist der erste Abschnitt am freien Ende des Polschaftes vorgesehen und das Gleitelement ist wenigstens teilweise von einem der Befestigung der Polhülse mit dem Deckel dienenden Befestigungsabschnitt der Polhülse umgeben. Bevorzugt weist der erste Abschnitt einen kleineren Durchmesser als der zweite Abschnitt auf. Der so um den ersten Abschnitt gebildete Hohlraum ist besonders bevorzugt mit fließfähigem Lot zur Abdichtung des Anschlusspols und zur Erzeugung einer elektrisch leitenden Verbindung zwischen Polhülse und Polschaft ausgefüllt.

In einer weiteren Ausführungsform des erfindungsgemäßen Akkumulators ist das Gleitelement als Einsatz in der Polhülse ausgebildet. Weiter bevorzugt ist der Einsatz in der Polhülse eingeklemmt. Ein solcher Einsatz kann mit Vorteil bei der Fertigung der Polhülse eingesetzt werden. Bevorzugt ist das Gleitelement am Deckel angeformt. Bei einer solchen mit dem Deckel integrierten Ausführung kann das Gleitelement in einem gemeinsamen Herstellungsschritt mit dem Dekkel gefertigt werden.

Erfindungsgemäß kann das Gleitelement auch auf den zweiten Abschnitt des Polschaftes aufgebracht sein. Das Gleitelement kann auch als den zweiten Abschnitt des Polschaftes zumindest teilweise umgebender Überzug ausgebildet sein. Sofern der zweite Abschnitt des Polschaftes einen unheitlichen Durchmesser aufweist, kann der Überzug dann einen Bereich des Polschaftes mit dem größten Durchmesser bedecken. Vorteilhaft ist hierbei eine einfache Herstellung des Akkumulators. Auch kann das Gleitelement als Beschichtung des Polschaftes ausgeführt sein.

Ebenso kann das Gleitelement als an einer Einführöffnung der Polhülse vorgesehener Ring ausgebildet sein. Bevorzugt kann der Ring angespritzt sein. Hier ergibt sich als Vorteil ein geringer Materialaufwand.

Zur Reduzierung der Reibung ist das Gleitelement aus einem Material mit einer glatten Oberfläche und weiter bevorzugt aus einem elastischen Material gebildet. Besonders bevorzugt ist das Gleitelement aus Kunststoff, vorzugsweise aus Polypropen gebildet. Ein solches Material ermöglicht ein besonders reibungsarmes Aufschieben der Polhülse auf den Polschaft.

Die Erfindung wird nachfolgend an Ausführungsbeispielen im Zusammenhang mit den begleitenden Figuren näher erläutert.

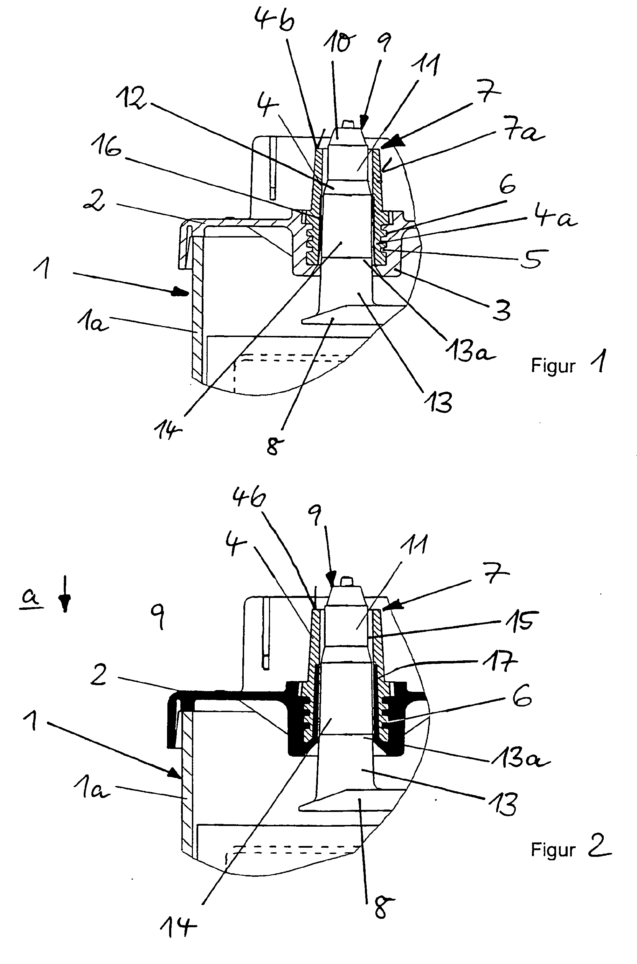

Dabei zeigen die Figuren 1 bis 4 jeweils einen Teilschnitt vier verschiedener Ausführungsformen des erfindungsgemäßen Akkumulators.

Nach Figur 1 weist ein erfindungsgemäßer Akkumulator ein Akkumulatorgehäuse 1 auf, das mit einem Seitenwände 1 a des Akkumulatorgehäuses 1 übergreifenden Deckel 2 nach oben abgeschlossen ist. In einem zum Gehäuseinneren angebrachten Schaftabschnitt 3 des Deckels 2 ist eine Polhülse 4 vorgesehen. Die in den Deckel 2 bei dessen Herstellung eingeformte Polhülse 4 weist an einem vom Schaftabschnitt 3 umgebenen Befestigungsabschnitt 4a umlaufende Nuten 5 auf. Die Nuten 5 sind mit einem Kunststoff des Deckels 2 ausgegossen, um eine gas- und flüssigkeitsdichte Verbindung in Form einer Labyrinthdichtung 6 zwischen dem Deckel 2 und der Polhülse 4 zu bilden.

Die Polhülse 4 ist zur Bildung eines Anschlusspols 7 auf einen mit einer Endplatte 8 des Akkumulators verbundenen rohrförmigen Polschaft 9 aufgesetzt. Dabei ragt der Polschaft 9 mit einem kappenartigen Abschluss 10 aus einem dem Gehäuse 1 abgewandten Ende 4b der Polhülse 4 heraus. Ein Außenmantel 7a des Anschlusspols 7 dient einem Anschluss eines Verbrauchers, etwa mittels einer nicht gezeigten Polklemme.

Unterhalb des kappenartigen Abschlusses 10 ist ein erster zylinderförmiger Abschnitt 11 des Polschaftes 9 vorgesehen, an dem der Anschlusspol 7 gas- und flüssigkeitsundurchlässig abgedichtet ist. Ebenso ist an dem ersten Abschnitt 11 eine elektrisch leitende Verbindung von Polhülse 4 und Polschaft 9 vorgesehen.

An den ersten Abschnitt 11 schließt sich ein Übergangsbereich 12 mit in Richtung zum Gehäuseinneren ansteigendem Querschnitt an. Zum Gehäuseinneren hin weist der Polschaft 7 unterhalb des Übergangsbereiches 12 einen zylinderförmigen Bereich 14 auf, an den sich ein Fußteil 13 anschließt.

Der Polschaft 9 ist mit dem Fußteil 13 auf der Endplatte 8 der Elektrode befestigt. Der Durchmesser des zylinderförmigen Bereiches 14 ist nur geringförmig kleiner als der Innendurchmesser der Polhülse 4.

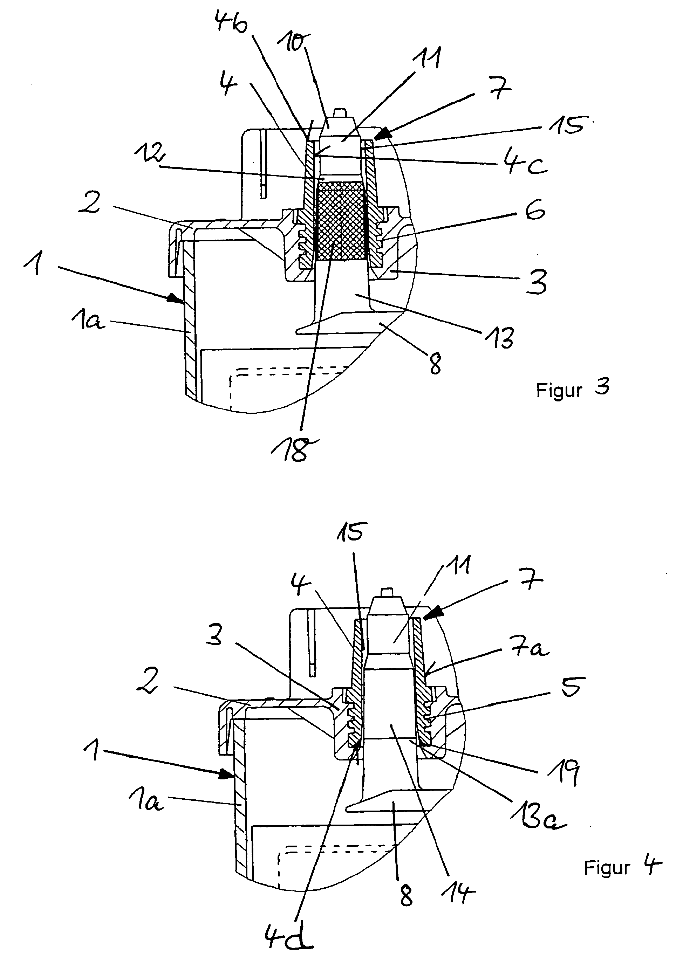

Der Durchmesser des zylinderfömigen Abschnitts 11 ist so gewählt, dass um den zylinderförmigen Abschnitt 11 und in dem Innenmantel 4c der Polhülse 4 ein Zwischenraum 15 gebildet ist, siehe Figur 3. Der Zwischenraum 15 wird bei einem Lötvorgang zur Erzeugung eines gas- und flüssigkeitsdichten Abschlusses des Anschlusspols 7 nach außen und zur Herstellung einer elektrisch leitenden Verbindung zwischen Polschaft 9 und Polhülse 4 mit entlang der durch den Pfeil a in Figur 2 vorgegebenen Richtung mit Blei-Lot ausgefüllt.

Gemäß Figur 1 sind der zylinderförmige Bereich 14 und ein von der Polhülse 4 umgebener Bereich 13a des Fußteils 13 am Übergang zum zylinderförmigen Bereich 14 von einem Gleitelement 16 umgeben. Das Gleitelement 16 befindet sich radial gesehen zwischen den Bereichen 14, 13a des Polschaftes 7 und einem diese umgebenden Abschnitt des Innenmantels 4c der Polhülse 4. Das rohrförmige Gleitelement 16 ist aus einem Material, das dazu beiträgt, den Reibungswiderstand zwischen den aufeinander zu bringenden Teilen von Polhülse 4 und Polschaft 9 zu reduzieren. Das rohrförmige Gleitelement 16 ist dabei in die Polhülse 4 eingeklemmt. Der zylinderförmige Bereich 14 und der von der Polhülse 4 umgebene Bereich 13a des Fußteils 13 bilden somit einen zweiten Abschnitt des Polschaftes 7, in dem die Reibung beim Aufschieben der Polhülse 4 verringert ist.

Figur 2 zeigt einen Akkumulator, bei dem an den hohlkörperartigen Schaftabschnitt 3 des Deckels 2 ein Gleitelement angeformt ist. Dabei läuft das Gleitelement zum oberen Ende 4b der Polhülse 4 hin als tüllenartiger Einsatz 17 aus, der eine Berührungsfläche für den zylinderförmigen Bereich 14 und den Bereich 13a des Fußteils 13 des Polschaftes 9 bildet.
In einer anderen in Figur 3 gezeigten Ausführungsform eines erfindungsgemäßen Akkumulators weist der Polschaft 9 einen Überzug 18 auf, der den zylinderförmigen Bereich 14 vollständig und den Übergangsbereich 12 teilweise umgibt. Erfindungsgemäß bildet der Überzug 18 eine Berührungsfläche für den Innenmantel 4c der Polhülse.

Wie die Figur 4 zeigt, ist es im Rahmen der Erfindung auch vorgesehen, an einer als Einführöffnung dienenden Unterseite 4d der Polhülse 4 eine umlaufende, den Innendurchmesser der Polhülse 4 erweiternde, Abschrägung vorzusehen. In die Abschrägung ist gemäß Figur 4 ein Kunststoffring 19 so eingebracht, dass dieser den Bereich 13a des Fußteils 13 des Polschaftes 9 umgibt. Der Kunststoffring 19 dient als Gleithilfe beim Übereinanderbringen von Polhülse 4 und Polschaft 9.

## Patentansprüche

1. Akkumulator mit wenigstens einem nach außen flüssigkeits- und gasdicht abgeschlossenen Anschlusspol, der einen in eine Polhülse eingesetzten Polschaft umfasst, wobei die Polhülse elektrisch leitend mit dem Polschaft verbunden ist und wobei die Polhülse flüssigkeits- und gasdicht von einem Deckel aufgenommen ist, **dadurch gekennzeichnet, dass** ein erster Abschnitt (11) des Polschaftes (9) mit einem diesen umgebenden Innenmantel (4c) der Polhülse (4) gas- und flüssigkeitsdicht sowie elektrisch leitend verbunden ist und **dass** zwischen einem zweiten Abschnitt (14, 13a) des Polschaftes (9) und dem Innenmantel (4c) der Polhülse (4) ein Gleitelement (16, 17, 18) vorgesehen ist.

2. Akkumulator nach Anspruch 1, **dadurch gekennzeichnet, dass** der erste Abschnitt (11) zum freien Ende (10) des Polschaftes (9) hin vorgesehen ist und das Gleitelement (16, 17, 18, 19) wenigstens teilweise von einem der Befestigung der Polhülse (4) mit dem Deckel (2) dienenden Befestigungsabschnitt (4a) der Polhülse (4) umgeben ist.

3. Akkumulator nach Anspruch 1 oder 2, **dadurch gekennzeichnet, dass** das Gleitelement (16) als Einsatz in der Polhülse (4) ausgebildet ist.

4. Akkumulator nach Anspruch 1 oder 2, **dadurch gekennzeichnet, dass** das Gleitelement (17) am Deckel (2) angeformt ist.

5. Akkumulator nach Anspruche 1 oder 2, **dadurch gekennzeichnet, dass** das Gleitelement (18) als Überzug des Polschafts (9) ausgebildet ist.

6. Akkumulator nach Anspruch 1 oder 2, **dadurch gekennzeichnet, dass** das Gleitelement als Beschichtung des Polschafts (9) ausgeführt ist.

7. Akkumulator nach Anspruch 1 oder 2, **dadurch gekennzeichnet, dass** das Gleitelement (19) als an einer Einführöffnung (4d) der Polhülse (4) vorgesehener Ring ausgebildet ist.

8. Akkumulator nach einem der Ansprüche 1 bis 7, **dadurch gekennzeichnet, dass** das Gleitelement (16, 17, 18, 19) aus Kunststoff gebildet ist.

## Claims

1. Rechargeable battery having at least one connecting pole, which is closed from the outside such that it is liquid-tight and gas-tight and has a pole shank which is inserted into a pole sleeve, with the pole sleeve being electrically conductively connected to the pole shank, and with the pole sleeve being held in a liquid-tight and gas-tight manner by a cover, **characterized in that** a first section (11) of the pole shank (9) is electrically conductively connected, in a gas-tight and liquid-tight manner, to an inner casing (4c) of the pole sleeve (4) which surrounds it, and **in that** a sliding element (16, 17, 18) is provided between a second section (14, 13a) of the pole shank (9) and the inner casing (4c) of the pole sleeve (4).

2. Rechargeable battery according to Claim 1, **characterized in that** the first section (11) is provided toward the free end (10) of the pole shank (9), and the sliding element (16, 17, 18, 19) is surrounded at least in places by an attachment section (4a) of the pole sleeve (4), which is used to attach the pole sleeve (4) to the cover (2).

3. Rechargeable battery according to Claim 1 or 2, **characterized in that** the sliding element (16) is in the form of an insert in the pole sleeve (4).

4. Rechargeable battery according to Claim 1 or 2, **characterized in that** the sliding element (17) is integrally formed on the cover (2).

5. Rechargeable battery according to Claim 1 or 2, **characterized in that** the sliding element (18) is in the form of a covering on the pole shank (9).

6. Rechargeable battery according to Claim 1 or 2, **characterized in that** the sliding element is in the form of a coating on the pole shank (9).

7. Rechargeable battery according to Claim 1 or 2, **characterized in that** the sliding element (19) is in the form of a ring which is provided on an insertion opening (4d) in the pole sleeve (4).

8. Rechargeable battery according to one of Claims 1 to 7, **characterized in that** the sliding element (16, 17, 18, 19) is formed from plastic.

## Revendications

1. Accumulateur comportant au moins une borne de raccordement formée de manière étanche aux liquides et aux gaz vis-à-vis de l'extérieur et comprenant une broche polaire logée dans un manchon polaire,
le manchon polaire est relié électriquement à la broche polaire et il est logé dans un couvercle, de manière étanche aux liquides et aux gaz,
**caractérisé en ce qu'**
un premier segment (11) de la broche polaire (9) est relié de manière étanche aux gaz et aux liquides et de façon électroconductrice à l'enveloppe intérieure (4c) du manchon polaire (4) qui entoure la broche, et
un élément de glissement (16, 17, 18) est prévu entre un second segment (14, 13a) de la broche polaire (9) et l'enveloppe intérieure (4c) du manchon polaire (4).

2. Accumulateur selon la revendication 1,
**caractérisé en ce que**
le premier segment (11) est prévu du côté de l'extrémité libre (10) de la broche polaire (9) et l'élément de glissement (16, 17, 18, 19) est au moins en partie entouré par un segment de fixation (4a) du manchon polaire (4) au couvercle (2).

3. Accumulateur selon la revendication 1 ou 2,
**caractérisé en ce que**
l'élément de glissement (16) est réalisé sous la forme d'un insert dans le manchon polaire (4).

4. Accumulateur selon la revendication 1 ou 2,
**caractérisé en ce que**
l'élément de glissement (17) est formé sur le couvercle (2).

5. Accumulateur selon la revendication 1 ou 2,
**caractérisé en ce que**
l'élément de glissement (18) est réalisé sous la forme d'un revêtement de la broche polaire (9).

6. Accumulateur selon la revendication 1 ou 2,
**caractérisé en ce que**
l'élément de glissement est réalisé sous la forme d'une enduction de la broche polaire (9).

7. Accumulateur selon la revendication 1 ou 2,
**caractérisé en ce que**
l'élément de glissement (19) est réalisé sous la forme d'un anneau prévu sur l'orifice d'entrée du manchon polaire (4).

8. Accumulateur selon l'une des revendications 1 à 7,
**caractérisé en ce que**
l'élément de glissement (16, 17, 18, 19) est en matière plastique.
